(19) Europäisches Patentamt
European Patent Office
Office européen des brevets

(11) **EP 1 059 610 A2**

(12) **EUROPÄISCHE PATENTANMELDUNG**

(43) Veröffentlichungstag:
**13.12.2000 Patentblatt 2000/50**

(51) Int. Cl.[7]: **G06T 9/00**

(21) Anmeldenummer: **00201921.4**

(22) Anmeldetag: **29.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.06.1999 DE 19926649**

(71) Anmelder:
• **Philips Corporate Intellectual Property GmbH**
**52064 Aachen (DE)**
Benannte Vertragsstaaten:
**DE**
• **Koninklijke Philips Electronics N.V.**
**5621 BA  Eindhoven (NL)**
Benannte Vertragsstaaten:
**FR GB**

(72) Erfinder:
• **Steigemann, Mark,**
**Philips Corp. Intell. Prop. GmbH**
**52064 Aachen (DE)**
• **Götting, Detlef,**
**Philips Corp. Intell. Prop. GmbH**
**52064 Aachen (DE)**

(74) Vertreter:
**Volmer, Georg, Dipl.-Ing. et al**
**Philips Corporate Intellectual Property GmbH,**
**Habsburgerallee 11**
**52064 Aachen (DE)**

(54) **Anordnung zur Trelliscodierung**

(57) Bei einer Anordnung zur Trelliscodierung von Eingangswerten, vorzugsweise transformierten Bildpunktdaten eines Bildes, wobei ein Trellis gebildet wird, in welchem jeder Trellisspalte ein Eingangswert zugeordnet ist, in welchem in jeder Trellisspalte eine vorgegebene Anzahl von möglichen Zuständen vorgesehen ist, in welchem die Auswahl eines Weges aus wenigstens zwei zugelassenen Wegen von einem Zustand einer Trellisspalte n zu demjenigen Zustand in der folgenden Trellisspalte n+1, zu dem der ausgewählte Weg führt, abhängig ist von der Verzerrung zwischen dem der Trellisspalte n zugeordneten Eingangswert und Quantisierungswerten, die dem Zustand in der Trellisspalte n zugeordnet sind, wobei die Verzerrung ein Maß für die Abweichung zwischen einem Eingangswert und einem Quantisierungswert darstellt, und in welchem mittels eines Pfadsuchalgorithmus in Rückwärtsrichtung derjenige Pfad durch das gesamte Trellis gesucht wird, für den sich über den gesamten Verlauf im Trellis die geringste aufsummierte Verzerrung ergibt, ist für einen minimalen Speicherbedarf vorgesehen, daß Mittel zum Bilden von Fenstern vorgesehen sind, welche jeweils eine solche Menge von Trellisspalten, die aufeinanderfolgenden Eingangswerten zugeordnet sind, umfassen,

daß Trellisspalten jeweils gleicher Position in benachbarten Fenstern weiter als eine Einflußlänge voneinander entfernt liegen, wobei die Einflußlänge denjenigen maximalen Abstand zwischen zwei Trellisspalten darstellt, für den in Folge der vorgegebenen zugelassenen Pfade durch das Trellis bezüglich der für die in den beiden Trellisspalten jeweils auswählbaren Quantisierungswerte gerade noch eine statistische Abhängigkeit existiert,

daß Mittel zum Speichern vorgesehen sind, welche die in den Fenstern bei der Durchführung der Trelliscodierung und/oder des Pfadsuchalgorithmus benötigten und ermittelten Daten aufnehmen,
daß in einem ersten Fenster W0 einer Sequenz von Eingangswerten eine Trelliscodierung durchgeführt wird
und daß in allen weiteren Fenstern der Sequenz in jedem Fenster Wn eine Trelliscodierung und im Fenster Wn und nachfolgend im Fenster Wn-1 der Pfadsuchalgorithmus angewendet werden, wobei bei der Durchführung des Pfadsuchalgorithmus im Fenster Wn-1 die Codeworte zu den den Trellisspalten des Fensters zugeordneten Eingangswerten ausgegeben werden.

EP 1 059 610 A2

FIG. 3

**Beschreibung**

Die Erfindung betrifft eine Anordnung zur Trelliscodierung von Eingangswerten, vorzugsweise transformierten Bildpunktdaten eines Bildes, wobei ein Trellis gebildet wird, in welchem jeder Trellisspalte ein Eingangswert zugeordnet ist, in welchem in jeder Trellisspalte eine vorgegebene Anzahl von möglichen Zuständen vorgesehen ist, in welchem die Auswahl eines Weges aus wenigstens zwei zugelassenen Wegen von einem Zustand einer Trellisspalte n zu demjenigen Zustand in der folgenden Trellisspalte n+1, zu dem der ausgewählte Weg führt, abhängig ist von der Verzerrung zwischen dem der Trellisspalte n zugeordneten Eingangswert und Quantisierungswerten, die dem Zustand in der Trellisspalte n zugeordnet sind, wobei die Verzerrung ein Maß für die Abweichung zwischen einem Eingangswert und einem Quantisierungswert darstellt, und in welchem mittels eines Pfadsuchalgorithmus in Rückwärtsrichtung derjenige Pfad durch das gesamte Trellis gesucht wird, für den sich über den gesamten Verlauf im Trellis die geringste aufsummierte Verzerrung ergibt.

Die Trelliscodierung ist aus den Veröffentlichungen „Universal Trellis Coded Quantization" von James H. Kasner, Michael W. Marcellin and Bobby R. Hunt, October 14, 1996 und „Progressive Image Coding Using Trellis Coded Quantization" von Ali Bilgin, Philip J. Sementilli, Michael W. Marcellin, December 9, 1997 bekannt und wird in diesen Veröffentlichungen ausführlich beschrieben. Es wird gemäß der Vorgehensweise dieser Veröffentlichungen ein Trellis gebildet, also eine Art Gitter. In dieser Gitterstruktur wird jeder Spalte ein Eingangswert des zu codierenden Signals zugeordnet. Das Trellis hat so viele Zeilen, wie in dem Gitter mögliche Zustände pro Spalte vorgesehen sind. Es wird durch das Trellis ein Weg gesucht, der von der dem ersten Eingangswert zugeordneten Spalte zu der letzten Spalte führt. Dabei sind jedoch nicht alle Übergänge innerhalb des Trellis zugelassen. Von einem bestimmten zugelassenen Wert in einer Spalte zu dem gesuchten nächsten zugelassenen Wert in der folgenden Spalte sind nur eine begrenzte, festgelegte Anzahl von Übergängen möglich. Welcher Übergang von den zugelassenen gewählt wird wird von der Verzerrung und dem vorigen ausgewählten Zustand abhängig gemacht, die grundsätzlich die Differenz zwischen dem Eingangswert darstellt und Quantisierungswerten, die wiederum den Zuständen zugeordnet sind. Somit wird ein Pfad durch das Trellis gesucht, der aufsummiert immer alle Übergänge in dem Trellis vom Anfang bis zum Ende die geringst mögliche Verzerrung ergibt. Auf diese Weise wird schließlich ein Endpunkt erreicht, also ein möglicher Zustand in der letzten Spalte des Trellis. Ist dieser erreicht, wird ausgehend von dem gefundenen Zustand der letzten Spalte ein Suchalgorithmus eingesetzt, der einen Weg zurück durch das Trellis findet, der die oben genannte Bedingung erfüllt. Dies ist dadurch möglich, daß auf dem Hinweg bei der Trelliscodierung für jede Verzweigung vermerkt wurde, welche Verzweigung günstiger war. Der für diese Auffindung des Pfades eingesetzte Suchalgorithmus wird in den beiden Veröffentlichungen beschrieben; es wird dort der Viterbi-Algorithmus eingesetzt, der aus der Veröffentlichung „The Viterbi Algorithm" von G.D. Forney, Proc. IEEE, Vol. 61, Seiten 268 bis 278 vom Mai 1973 bekannt ist.

Die Trelliscodierung kann grundsätzlich als eindimensionale Vektorquantisierung verstanden werden. Sie hat gegenüber der skalaren Quantisierung den Vorteil, daß auch der zeitliche bzw. räumliche Kontext der Eingangswerte einer Sequenz untereinander in die Quantisierung einfließt. Weiterhin erfolgt durch die Einbringung des jeweils vorhergehenden Zustands eine Einsparung bei der Codierung der Quantisierungswerte. Bei der oben beschriebenen Vorgehensweise besteht jedoch der Nachteil, daß alle Werte des Trellis, also die Eingangswerte, die zugelassenen Zustände, die in jedem Übergang ermittelten Verzerrungen und der gewählte optimale Übergang, für das gesamte Trellis gespeichert werden müssen, da erst nach Durchführung der Trelliscodierung im Hinweg anschließend der Einsatz des Pfadsuchalgorithmus erfolgt, der wiederum auf die gespeicherten Werte zurück greift. Somit entsteht in einer Anordnung für die Durchführung der Trelliscodierung ein erheblicher Speicherbedarf.

Es ist Aufgabe der Erfindung, eine Anordnung zur Durchführung einer derartigen Trelliscodierung anzugeben, bei der der Speicherbedarf deutlich reduziert wird.

Diese Aufgabe ist erfindungsgemäß dadurch gelöst, daß Mittel zum Bilden von Fenstern vorgesehen sind, welche jeweils eine solche Menge von Trellisspalten, die aufeinanderfolgenden Eingangswerten zugeordnet sind, umfassen,

daß Trellisspalten jeweils gleicher Position in benachbarten Fenstern weiter als eine Einflußlänge voneinander entfernt liegen, wobei die Einflußlänge denjenigen maximalen Abstand zwischen zwei Trellisspalten darstellt, für den in Folge der vorgegebenen zugelassenen Pfade durch das Trellis bezüglich der für die in den beiden Trellisspalten jeweils auswählbaren Quantisierungswerte gerade noch eine statistische Abhängigkeit existiert, daß Mittel zum Speichern vorgesehen sind, welche die in den Fenstern bei der Durchführung der Trelliscodierung und/oder des Pfadsuchalgorithmus benötigten und ermittelten Daten aufnehmen, daß in einem ersten Fenster W0 einer Sequenz von Eingangswerten eine Trelliscodierung durchgeführt wird und daß in allen weiteren Fenstern der Sequenz in jedem Fenster Wn eine Trelliscodierung und im Fenster Wn und nachfolgend im Fenster Wn-1 der Pfadsuchalgorithmus angewendet werden, wobei bei der Durchführung des Pfadsuchalgorithmus im Fenster Wn-1 die Codeworte zu den den Trellisspalten des Fensters zugeordneten Eingangswerten ausgegeben werden.

Der Kerngedanke der Erfindung besteht darin, die Trelliscodierung einschließlich Einsatz des Pfadsuchalgorithmus nicht über eine gesamte Sequenz von Bildpunkten durchzuführen, sondern diese fensterweise vorzunehmen. Dabei besteht das Problem, daß bei der Durchführung der Trelliscodierung und deren Pfadsuchalgorithmus sichergestellt sein muß, daß durch die Einteilung in Fenster keine verfälschten Ergebnisse entstehen, daß also mit anderen Worten die Fenster keinen Einfluß auf die Ergebnisse der Codierung der Gesamt-Sequenz haben dürfen.

Die Lösung für dieses Problem liegt erfindungsgemäß in der Art der Wahl der Fenster und in der Art der Vorgehensweise der Anwendung der Trelliscodierung einschließlich des Pfadsuchalgorithmus, die im folgenden beschrieben wird.

Es sind Mittel zum Bilden von Fenstern vorgesehen, welche jeweils eine solche Anzahl von Trellisspalten, denen jeweils ein Eingangswert zugeordnet aufweisen, daß jeweils Spalten gleicher Position in benachbarten Fenstern um mehr als eine sogenannte Einflußlänge voneinander entfernt liegen. Mit anderen Worten: Die Länge der Fenster beträgt immer mehr als die Einflußlänge.

Unter Einflußlänge wird dabei derjenige Abstand zwischen zwei Spalten und somit auch zwischen den diesen Spalten zugeordneten Eingangswerten verstanden, für die infolge der Eigenarten der Trelliscodierung keine statistische Abhängigkeit bei der Ermittlung der möglichen Zustände in den beiden Spalten besteht. Bei der Trelliscodierung besteht grundsätzlich eine statistische Abhängigkeit bei der Ermittlung der möglichen Werte aufeinanderfolgender Bildpunkte, da ja von einem bestimmten Zustand einer Spalte n zu dem gesuchten Zustand der darauffolgenden Spalte n+1 nur eine begrenzte Anzahl von Übergängen zugelassen ist. D.h. es kann in der Spalte n+1 nicht jeder mögliche Zustand gewählt werden. Je weiter zwei Spalten auseinander liegen, desto mehr verringert sich diese statistische Abhängigkeit. Ab einem bestimmten Abstand zweier Eingangswerte und somit auch zweier zugeordneter Spalten in dem Trellis ist diese statistische Abhängigkeit quasi nicht mehr vorhanden, da die Abhängigkeit für eine Abstand gegen Unendlich gegen Null geht. Der Abstand, bei dem dies eintritt, kann durch Ausprobieren statistisch ermittelt werden.

Aufgrund der Durchführung der Trelliscodierung einschließlich Durchführung des Pfadsuchalgorithmus sind nunmehr in der erfindungsgemäßen Anordnung nur noch solche Mittel zum Speichern erforderlich, welche die in den Fenstern bei der Durchführung der Trelliscodierung bzw. des Pfadsuchalgorithmus benötigten und ermittelten Daten aufnehmen. Somit hat sich der Speicheraufwand gegenüber den Anordnungen nach dem Stande der Technik erheblich verringert, da eine Sequenz von Bildpunkten in eine Vielzahl von Fenstern unterteilt werden kann.

Die Durchführung der Trelliscodierung einschließlich Anwendung des Pfadsuchalgorithmus wird dabei in den Fenstern in folgender Weise vorgenommen:

Zu Beginn muß in einem ersten Fenster W0 einer Sequenz von Eingangswerten eine Trelliscodierung durchgeführt werden.

In allen darauf folgenden Fenstern gilt folgende Vorgehensweise:

In einem Fenster Wn wird zunächst eine Trelliscodierung in dem Trellisabschnitt gemacht, der zu diesem Fenster gehört. Anschließend wird in diesem Fenster Wn der Pfadsuchalgorithmus eingesetzt. Es kann jedoch bei dieser Anwendung des Pfadsuchalgorithmus in dem Fenster Wn noch keine Ausgabe von Codewerten erfolgen, da die oben beschriebene statistische Unabhängigkeit für die Werte dieses Fenstern noch nicht gilt und die Einflußlänge noch nicht überschritten ist. Dies gilt jedoch bei Anwendung des Pfadsuchalgorithmus in dem vorherigen Fenster Wn-1. Da hier für jede Spalte dieses Fensters Wn-1 die Einflußlänge zu den gleichen Spalten in dem Fenster Wn überschritten ist und somit die statistische Abhängigkeit bei der Ermittlung der möglichen Zustände nicht mehr gilt. Es kann also bei der Durchführung des Pfadsuchalgorithmus in dem Fenster Wn-1 eine Ausgabe der Codeworte erfolgen. Die Ausgabe der Codeworte erfolgt dabei, wie nach dem Stande der Technik vorgesehen, in Abhängigkeit des als optimal ermittelten Pfades und der dabei gewählten Übergänge, denen jeweils Quantisierungswerte zugeordnet sind, die als Codeworte ausgegeben werden.

Durch diese Wahl der Fenstergröße in dem Trellis und die spezielle Art der Vorgehensweise bei der wechselweisen Anwendung der Trelliscodierung im Hinwege und des Pfadsuchalgorithmus im Rückwege wird in der Anordnung eine beträchtliche Einsparung von Speicherplatz erreicht, da jeweils nur die Daten der Fenster des Trellis gespeichert werden müssen.

Bei dem wechselweisen Einsatz der Trelliscodierung im Hinwege und des Pfadsuchalgorithmus im Rückwege muß sichergestellt werden, daß die Trelliscodierung in einem Fenster Wn mit dem gleichen möglichen Zustand startet, der zuvor in dem gleichen Fenster Wn bei der Anwendung des Pfadsuchalgorithmus als letzter Zustand ermittelt wurde. Dieses muß sichergestellt werden, damit für die Codierung, also die Werte der Codeworte, an den Fensterübergängen ein kontinuierlicher Übergang eintritt. Es dürfen die Übergänge der Fenster in der Codierung nicht in Erscheinung treten. Dies kann gegebenenfalls dadurch sichergestellt werden, daß als zugelassener Zustand, mit dem die Trelliscodierung im Fenster Wn startet, derjenige Wen gewählt wird, der im gleichen Fenster für die erste Spalte des Fensters durch den Pfadsuchalgorithmus ermittelt wurde.

Die oben beschriebene Einsparung von Speicherplatz kann durch eine weitere Ausgestaltung der Erfindung gemäß Anspruch 3 weiter verbessert werden. Es sind hier nur noch zwei Speicher S1 und S2 vorgesehen, welche jeweils die Daten eines Trellis und die darin ermittelten Werte aufnehmen.

Die beiden Speicher werden in einem Zyklus eingesetzt, bei dem eine Trelliscodierung in einem Fenster Wn und die Anwendung des Pfadsuchalgorithmus in dem gleichen Fenster in einem Speicher vorgenommen werden. Die anschließende Anwendung des Pfadsuchalgorithmus im vorherigen Fenster wird in dem jeweils anderen Speicher vorgenommen. Während Anwendung des Pfadsuchalgorithmus in dem anderen Speicher wird bereits, soweit für bestimmte Spalten des Trellis Codeworte ausgegeben wurden, die Werte in dem Speicher durch die Trelliswerte, die bei der nachfolgenden Anwendung der Trelliscodierung in dem Fenster Wn+1 benötigt werden, in den Speicher geschrieben. Dann wird in diesem anderen Speicher für das Fenster Wn+1 die Trelliscodierung und der Pfadsuchalgorithmus durchgeführt. Die nachfolgende Durchführung des Pfadsuchalgorithmus in dem Fenster Wn wird dann wieder in dem ersten Speicher durchgeführt, wobei wiederum der Speicherinhalt nach und nach bereits durch die Werte des nächsten Fensters Wn+2 ersetzt wird.

Auf diese Weise werden die Speicher wechselweise für die Trelliscodierung einschließlich Anwendung des Pfadsuchalgorithmus eingesetzt.

Eine weitere Ausgestaltung der Erfindung gemäß Anspruch 4 sieht als Pfadsuchalgorithmus den Viterbi-Algorithmus vor, dessen Anwendung relativ einfach ist.

Gemäß einer weiteren Ausgestaltung der Erfindung gemäß Anspruch 5 wird als die oben beschriebene Verzerrung der sogenannte Mean-squared-error angesetzt, der sich aus dem Quadrat der Differenz zweier Werte ergibt, in diesem Fall einem Eingangswert und einem Quantisierungswert.

Das letzte Fenster einer Sequenz ist gemäß einer weiteren Ausgestaltung der Erfindung gemäß Anspruch 6 so zu wählen, daß die erste und die letzte Spalte des Fensters die Einflußlänge überschreiten. Damit ist eine Durchführung des Pfadsuchalgorithmus innerhalb dieses letzten Fensters bereits beim ersten Durchlauf möglich, so daß eine Codierung auch dieses letzten Fensters einer Sequenz ohne statistische Abhängigkeit erfolgen kann.

Gemäß einer weiteren Ausgestaltung der Erfindung nach Anspruch 7 handelt es sich bei den Eingangswerten um Bildpunkte eines Standbildes. Vor Durchführung der Trelliscodierung sind diese einer diskreten Wavelet-Transformation unterzogen worden und die Durchführung der Trelliscodierung wird in den durch diese diskrete Wavelet-Transformation gebildeten Fenstern vorgenommen, wobei die Bilddaten eines Fensters jeweils eine Sequenz der Bildpunkte darstellen. Damit kann die statistische Abhängigkeit der Bildpunkte innerhalb dieser Fenster, deren Daten auch als Subbands bezeichnet werden, bei der Trelliscodierung besonders gut genutzt werden.

Insbesondere für Bildpunktwerte, aber auch für andere vergleichbare Werte, beispielsweise Audiosignale, ist gemäß einer weiteren Ausgestaltung der Erfindung nach Anspruch 8 vorgesehen, daß die Einflußlänge $E \geq 5 \cdot N$ angesetzt wird, wobei N die Zahl der möglichen Zustände pro Trellisspalte ist, also der Anzahl der Zeilen in dem Trellis entspricht. Dieser Wert ist ein Erfahrungswert für derartige Signale.

Nachfolgend wird ein Ausführungsbeispiel der Erfindung anhand der Zeichnung näher erläutert. Es zeigen:

Fig. 1 einen Ausschnitt von zwei Trellisspalten aus einem Trellis, in dem pro Spalte vier mögliche Zustände vorgesehen sind,
Fig. 2 einen Ausschnitt über fünf Trellisspalten aus einem Trellis mit acht möglichen Zuständen je Trellisspalte,
Fig. 3 eine schematische Darstellung der fensterweisen Durchführung der Trellisquantisierung einschließlich Anwendung des Pfadsuchalgorithmus unter zyklischem Einsatz zweier Speicher und
Fig. 4 eine schematische Darstellung eines der Speicher zur Verdeutlichung der Datenorganisation.

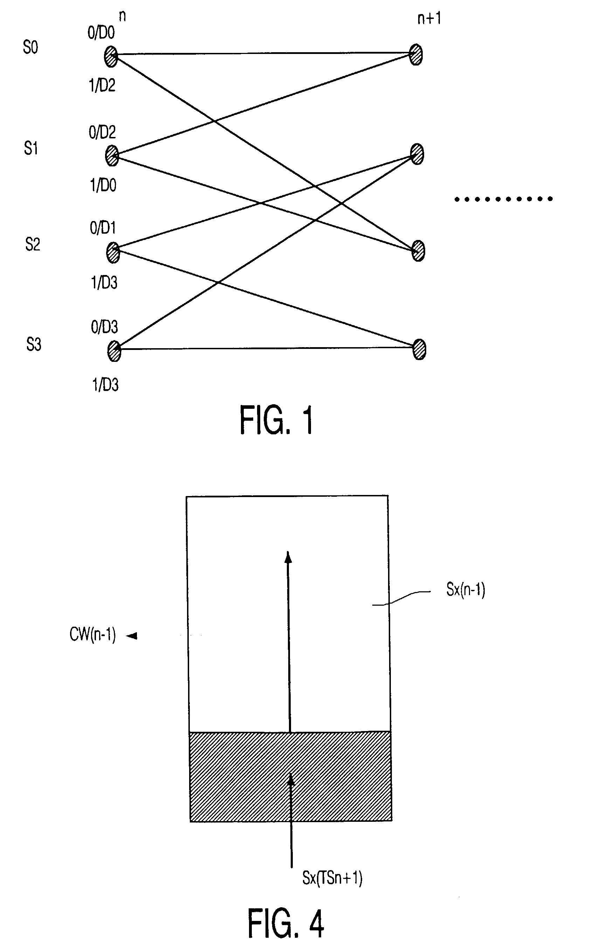

In Fig. 1 ist ein Ausschnitt aus einem Trellis dargestellt, welches je Trellisspalte vier mögliche Zustände S0, S1, S2 und S3 vorsieht. Es handelt sich also um ein Trellis mit vier Zeilen.

Das Trellis weist eine Anzahl von Spalten auf, die der Zahl der zu codierenden Eingangswerte entspricht, da jeder Spalte n, n+1 und sofort jeweils ein Eingangswert zugeordnet ist.

Jedem möglichen Zustand in einer Trellisspalte sind jeweils eine solche Anzahl von Quantisierungswerten D0, D1, D2 und D3 zugeordnet, wie von diesem zugelassenen Zustand aus Verbindungswege zu anderen möglichen Zuständen der nächsten Trellisspalte n+1 existieren. So ist beispielsweise von dem möglichen Zustand S0 in der Trellisspalte n ein Übergang zu den möglichen Zuständen S0 der Trellisspalte n+1 sowie des möglichen Zustands S2 der Trellisspalte n+1 vorgesehen. Es kann also von dem möglichen Zustand S0 der Trellisspalte n nur auf diese beiden möglichen Zustände der Trellisspalte n+1 gewechselt werden. Entsprechendes gilt für die anderen möglichen Zustände S1, S2, S3 der Trellisspalte n, für die jeweils ebenfalls nur zwei zugelassene Wege zu jeweils zwei möglichen Zuständen in der Trellisspalte n+1 existieren. Im Ergebnis ist also von einem Zustand der Trellisspalte n nur ein beschränkter Übergang auf bestimmte Zustände der Trellisspalte n+1 möglich; insbesondere ist keine freie Wahl des zu wählenden möglichen Zustandes in der Trellisspalte n+1 möglich, da immer nur die zugelassenen Pfade gewählt werden dürfen. Die Pfadstruktur in dem Trellis wird vorgegeben und ist auch davon abhängig, wie viele mögliche Zustände innerhalb einer Spalte eines Trellis vorgesehen sind.

Die Wahl zwischen mehreren zugelassenen Wegen von einem Zustand der Trellisspalte n zu den möglichen Zuständen der Trellisspalte n+1 wird nach folgendem Kriterium vorgenommen:

Beispielsweise dem möglichen Zustand S0 der Trellisspalte n sind zwei Quantisierungswerte D0 und D2 zugeordnet. Es wird die Verzerrung zwischen dem Eingangswert, der der Trellisspalte n zugeordnet ist, und dem Quantisierungswert D0 ermittelt. Ferner wird der Wert der Verzerrung zwischen dem Eingangswert und dem Quantisierungswert D2 ermittelt. Derjenige Quantisierungswert D0 oder D2 für den die geringere Verzerrung ermittelt wurde, wird ausgewählt. Diesem Quantisierungswert ist auch ein Übergang zu einem Zustand der nächsten Spalte zugeordnet. In dem Beispiel gemäß Fig. 1 ist dem Quantisierungswert D0 der Übergang zu dem Zustand S0 in der Trellisspalte n+1 zugeordnet. Dem Quantisierungswert D2 ist hingegen der Übergang zu dem möglichen Zustand S2 der Trellisspalte n+1 zugeordnet.

Abhängig davon, für welchen der beiden Quantisierungswerte sich eine geringere Verzerrung ergibt, wird der zugeordnete Weg gewählt. Ist also beispielsweise die Verzerrung des Quantisierungswertes D0 kleiner, wird in der Trellisspalte n+1 der erste mögliche Zustand S0 gewählt. Ist hingegen die Verzerrung des Wertes D2 kleiner, wird in der Trellisspalte n+1 der mögliche Zustand S2 gewählt.

Die Verzerrung versteht sich dabei grundsätzlich als Abstand zwischen dem Quantisierungswert und dem zugeordneten Eingangswert. Insbesondere kann dabei der sogenannte Mean-squared-error eingesetzt werden, der das Quadrat in der Differenz der Abstände der beiden Werte darstellt.

Bei der Trelliscodierung können also in dieser Weise von einem Zustand einer Spalte n zu Zuständen der darauffolgenden Spalte n+1 immer nur festgelegte Wege beschritten werden, welche in Abhängigkeit der dem Ausgangszustand zugeordneten Quantisierungswerte beschritten wird.

In dem oben erläuterten Beispiel wird ferner vermerkt, welcher der beiden zugelassenen Wege aufgrund der geringeren Verzerrung der zugeordneten Quantisierungswerte gewählt wurde. Ist beispielsweise die Verzerrung zwischen dem Quantisierungswert D2 und dem Eingangswert der Trellisspalte n kleiner als der Verzerrungswert zwischen dem Quantisierungswert D0 und dem Eingangswert, so wird der Übergang zu dem möglichen Zustand S2 der Trellisspalte n+1 ausgewählt.

Dabei wird bei der Trelliscodierung in dem Punkt S0 der Trellisspalte n vermerkt, daß der Übergang zu dem möglichen Zustand S2 der Trellisspalte n+1 ausgewählt wurde. Diese Information wird abgespeichert und wird bei einer nachfolgenden Anwendung eines Pfadsuchalgorithmus dazu eingesetzt, einen möglichst günstigen Pfad zu finden.

Ferner wird in dem gewählten Beispiel bei dem Übergang vom möglichen Zustand S0 der Trellisspalte n zu dem möglichen Zustand S2 der Trellisspalte n+1 die dabei ermittelte Verzerrung zwischen dem Quantisierungswert D2 und dem der Trellisspalte n zugeordneten Eingangswert in einem Speicher abgespeichert, der dem möglichen Zustand S2 der Trellisspalte n+1 zugeordnet ist. Diese Verzerrung wird bei jedem Übergang von einer Trellisspalte zur nächsten ermittelt und der zuvor ermittelten Verzerrung aufaddiert. Es wird somit ein Pfad in dem gesamten Trellis verfolgt, wobei für alle Übergänge zwischen Spalten des Trellis die Verzerrung aufsummiert wird.

In dem gewählten Beispiel war also bereits in dem möglichen Zustand S0 der Trellisspalte n eine aufsummierte Verzerrung gespeichert worden, die nun zusammen mit der zusätzlichen ermittelten Verzerrung zwischen dem Quantisierungswert D2 und dem Eingangswert der Trellisspalte n in den neuen möglichen Zustand S2 der Trellisspalte n+1 aufsummiert und dort gespeichert wird.

Diese Vorgehensweise wird für alle möglichen Zustände einer Spalte wiederholt, wobei insbesondere für jeden möglichen Zustand eine Spalte n vermerkt wird, welcher der zugelassenen Wege zu einem möglichen Zustand der Spalte gewählt wurde. Diese Information wird später für den Pfadsuchalgorithmus benötigt.

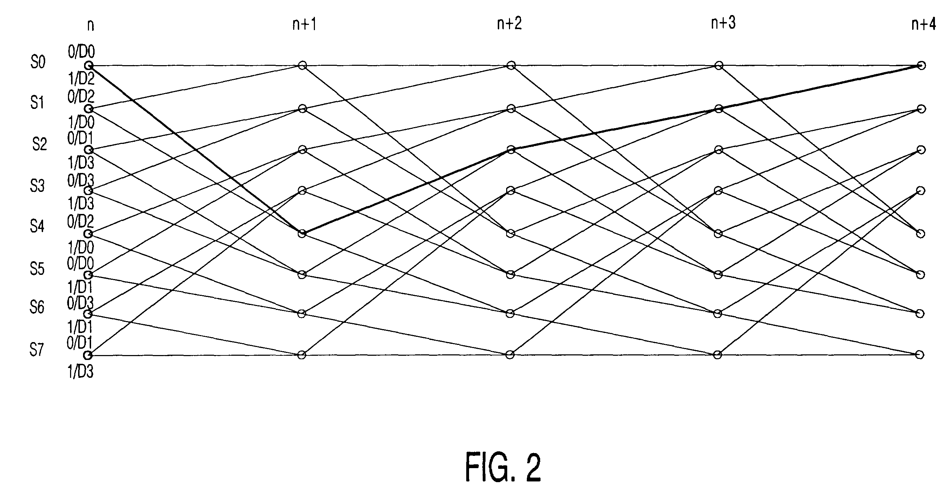

Fig. 2 zeigt ebenfalls einen Ausschnitt aus einem Trellis, jedoch einem solchen, welches pro Trellisspalte vier mögliche Zustände vorsieht. Ferner ist der Ausschnitt in der Fig. 2 etwas größer gewählt, so daß fünf Trellisspalten n bis n+4 angedeutet sind.

Auch in dem Trellis gemäß Fig. 2 sind von einem möglichen Zustand einer bestimmten Trellisspalte aus nur zwei Wege zugelassen, es können also in der nachfolgenden Trellisspalte nur zwei mögliche Zustände gewählt werden.

In Fig. 2 ist ein Pfad dick eingetragen, dabei handelt es sich um denjenigen Pfad, für den die oben beschriebene aufsummierte Verzerrung den geringsten Wen ergibt. Wird beispielsweise davon ausgegangen, daß es sich bei der Trellisspalte n+4 in der Darstellung gemäß Fig. 2 um die letzte Trellisspalte des Trellis handelt, so wird in dieser Trellisspalte in dem Beispiel gemäß Fig. 2 der zugelassene Zustand S0 ermittelt. Dies ist derjenige Zustand, für den der Pfad, der in diesem Zustand mündet, die geringste aufsummierte Verzerrung ergibt.

Da jedoch nicht abgespeichert wird, wie dieser Pfad genau verlief, wird ausgehend von dem gefundenen Endpunkt der Pfadsuchalgorithmus eingesetzt. Dabei wird ausgehend von diesem Endwert, der in der letzten Trellisspalte als zugelassener Wert ausgewählt wurde, ein Weg zurück zum Anfang durch das Trellis gesucht, der der Bedingung entspricht, über seine gesamte Länge die geringste aufsummierte Verzerrung aufzuweisen. Dabei wird bei der Anwendung des Suchalgorithmus die für jeden zugelassenen Zustand jeder Spalte des Trellis vermerkte Information darüber, welcher Pfad zu einem Zustand der darauffolgenden Trellisspalte als günstiger gefunden und gewählt wurde, zur Auffindung des optimalen Pfades eingesetzt.

In dem Beispiel in Fig. 2 würde, ausgehend von dem möglichen Zustand S0 der letzten Trellisspalte n+4, in der Trellisspalte n+3 unter denjenigen möglichen Zuständen, von denen zugelassene Wege zu dem Punkt S0 der Trellisspalte n+4 führen, derjenige gesucht, für welchen dieser möglichen Zustände bei der Trelliscodierung für diesen Zustand der Pfad zu dem möglichen Zustand S0 der Trellisspalte n+4 gewählt und vermerkt wurde. Findet der Viterbi-Algorithmus in der Trellisspalte n+3 keine derartige Information wird weiter in der Trellisspalte n+2 gesucht. Findet sich auch dort ein derartiger Vermerk über den günstigsten Weg nicht, wird ein beliebiger Weg gewählt. Entsprechend wird in Rückwänsrichtung, also zum Anfang des Trellis hin, weiter gearbeitet. Es wird schließlich durch den Algorithmus ein Weg gefunden, für den die Verzerrungen zwischen den den möglichen Zuständen und den zugeordneten Übergingen zugeordneten Quantisierungswerten und den den Trellisspalten zugeordneten Eingangswerten möglichst gering ist.

Als Codeworte werden für jede Trellisspalte und damit dem zugeordneten Eingangswert jeweils derjenige Quantisierungswert ausgegeben, der dem in der Trellisspalte durchlaufenen möglichen Zustand und den dabei gewählten Weg zugeordnet ist. Wird beispielsweise in der Darstellung gemäß Fig. 2 auf dem fett eingezeichneten Pfad der Trellisspalte n+1 zu der Trellisspalte n der eingezeichnete Pfad durchlaufen, so würde für den Eingangswert, der der Trellisspalte n zugeordnet ist, der Quantisierungswert D2 als Codewort ausgegeben. In entsprechender Weise werden für alle Trellisspalten und somit für alle Eingangswerte der Sequenz Codeworte ausgegeben.

Bei den Anordnungen bzw. Verfahren nach dem Stande der Technik wird eine Trelliscodierung einschließlich anschließendem Pfadsuchalgorithmus und Ausgabe der Codeworte vollständig für ein gesamtes Trellis durchgeführt. Dabei ist der Speicherbedarf beträchtlich, da alle Informationen in dem Trellis und alle bei der Trelliscodierung einschließlich Anwendung des Pfadsuchalgorithmus abzuspeichernden Werte für alle Trellisspalten in dem Speicher zu speichern sind.

Erfindungsgemäß wird eine beträchtliche Reduzierung des Speicherbedarfes dadurch erreicht, daß die Trelliscodierung einschließlich Durchführung des Pfadsuchalgorithmus in Fenstern vorgenommen wird. Es wird also eine Sequenz von Bildpunkten und entsprechend der zugehörige Trellis in Fenster zerlegt.

Dabei ist die Wahl der Fenstergröße insbesondere abhängig von der Einflußlänge. Die Einflußlänge gibt denjenigen Abstand zwischen zwei Trellisspalten an, für die sich infolge der festgelegten Verzweigungsstruktur innerhalb des Trellis gerade noch eine statistische Abhängigkeit bei der Wahl der möglichen Zustände ergibt. Diese statistische Abhängigkeit durch die beschränkte Wahl der möglichen Zustände verringert sich mit zunehmendem Abstand der Trellisspalten. Die Einflußlänge bezeichnet nun denjenigen Abstand der Trellisspalten, für den gerade noch eine solche Abhängigkeit existiert. Die Fenster werden nun bezüglich ihrer Größe so gewählt, daß sie gerade länger als diese Einflußlänge sind. Mit anderen Worten: Trellisspalten gleicher Position in aufeinanderfolgenden Fenstern weisen einen solchen Abstand auf, der gerade über der Einflußlänge liegt.

Für Bildsignale und ähnliche Signale kann durch statistische Untersuchungen nachgewiesen werden, daß die Einflußlänge $E \geq 5 \cdot N$ beträgt, wobei N für die Zahl der möglichen Zustände pro Trellisspalte steht.

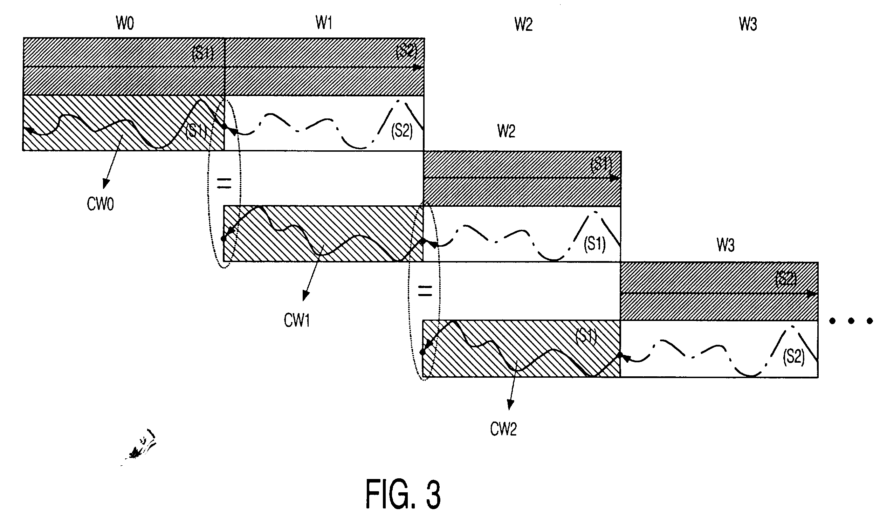

Anhand der Fig. 3 soll im folgenden erläutert werden, wie die erfindungsgemäße Anordnung die Viterbi-Codierung einschließlich Durchführung des Pfadsuchalgorithmus fensterweise vornimmt und wie dabei die Speicherverwaltung durchgeführt wird.

Die Darstellung gemäß Fig. 3 zeigt in schematischer Darstellung Fenster W0, W1, W2 und W3. Diese Fenster bilden jeweils einen Teil eines Trellis, der in der Fig. 3 nicht näher angedeutet ist. Dabei weisen die Fenster W jeweils eine Länge auf, die die oben beschriebenen Bedingungen insbesondere bezüglich Einflußlänge einhält.

Bei dem Fenster W0 entsprechend der Darstellung Fig. 3 handelt es sich um ein erstes Fenster einer Sequenz von Bildpunkten, für das zunächst eine Trelliscodierung durchgeführt wird. Nachfolgend wird für das darauffolgende Fenster W1 ebenfalls eine Trelliscodierung durchgeführt. In dem Fenster W1 wird anschließend mittels des Pfadsuchalgorithmus das Fenster W1 wieder bis zum Anfang durchlaufen, wobei schließlich in der ersten Trellisspalte des Fensters W1 ein möglicher Zustand ermittelt wird. Ausgehend von diesem möglichen Zustand wird anschließend im Fenster W0 ebenfalls der Pfadsuchalgorithmus angewendet.

Beim Durchlaufen des Fensters W1 mittels des Pfadsuchalgorithmus können noch keine Codeworte ausgegeben werden, da hier die Einflußlänge noch nicht überschritten ist, d.h. vom Ende des Fensters W1 bis zum Anfang dieses Fensters ist die Einflußlänge noch nicht überschritten, es existiert also eine statistische Abhängigkeit bei der Ermittlung des optimalen Pfades. Erst mir Durchführung des Pfadsuchalgorithmus im Fenster W0 ist diese Einflußlänge bezogen auf das Ende des Fensters W1 überschritten. Somit kann nun davon ausgegangen werden, daß bei der Ermittlung des optimalen Pfades im Fenster W0 keine statistische Abhängigkeit von den früheren Geschehnissen mehr vorliegt und somit richtige Ergebnisse erzielt werden. Somit kann beim Durchlaufen des optimalen Pfades im Fenster W0 mittels des Pfadsuchalgorithmus bereits eine Ausgabe der Codeworte erfolgen. Diese Codeworte sind in der Fig. 3 mit CW0 gekennzeichnet.

Nachfolgend sollen nun die Codeworte für das Fenster W1 ermittelt werden. Um auch hier wieder die Einflußlänge zu überschreiten und somit jegliche statistische Abhängigkeit zu unterbinden, wird zunächst für die Daten des Fensters W2 die Trelliscodierung und anschließend der Pfadsuchalgorithmus angewendet. Bei der weiteren Anwendung des Pfadsuchalgorithmus im Fenster W1 ist dann wiederum die Einflußlänge überschritten, so daß hier wiederum eine Ausgabe der Codeworte erfolgen kann, diesmal das Codewort CW1 für das Fenster W1.

In entsprechender Weise wird für die weiteren Fenster fortgefahren. So muß für die Ausgabe der Codeworte CW2 des Fensters W2 zunächst im darauffolgenden Fenster W3 der Viterbi-Algorithmus sowie der Pfadsuchalgorithmus angewendet werden. Erst nachfolgend kann bei Durchlaufen des Fensters W2 mittels des Pfadsuchalgorithmus eine Ausgabe der Codeworte CW2 erfolgen, da erst dann die Einflußlänge überschritten ist.

Im Ergebnis wird somit trotz der Zerlegung des Trellis in die Fenster erreicht, daß eine Trelliscodierung erfolgen kann, ohne daß durch die Fenster irgendwelche Einflüsse auf die Codierung entstehen. Dies wird dadurch erreicht, daß die Fenster größer gewählt werden als die Einflußlänge, also die statistische Abhängigkeit bei der Trelliscodierung.

Um darüber hinaus statistische Zufälligkeiten auszuschließen, kann vorteilhaft sichergestellt werden, daß derjenige mögliche Zustand der ersten Trellisspalte dieses Fensters, der bei Durchlaufen dieses Fensters mittels des Pfadsuchalgorithmus bei Ausgabe der Codeworte erreicht wird, der gleiche mögliche Zustand ist, der im gleichen Fenster zuvor bei erstmaliger Durchführung des Pfadsuchalgorithmus in der ersten Spalte ermittelt wurde. Dies ist deshalb erforderlich, weil dieser Punkt für die Anwendung des Pfadsuchalgorithmus unter Ausgabe der Codeworte in dem Fenster Wn-1 als Ausgangspunkt dient und bei der Ausgabe der Codeworte kein Sprung der möglichen Zustände an dieser Übergangsstelle erfolgen darf.

Beispielsweise bezogen auf die Darstellung gemäß Fig. 3 bedeutet dies:

Bei Durchführung der Trelliscodierung in dem Fenster W1 und anschließender Durchführung des Pfadsuchalgorithmus wird in der ersten Trellisspalte des Fensters W1 ein möglicher Zustand gewählt, der nachfolgend bei der Durchführung des Pfadsuchalgorithmus im Fenster W0 und bei der Ausgabe der Codeworte CW0 als Ausgangspunkt dient. Nachfolgend erfolgt im Fenster W2 eine Trelliscodierung und anschließende Anwendung des Pfadsuchalgorithmus, woran sich im Fenster W1 bei Anwendung des Pfadsuchalgorithmus eine Ausgabe da Codeworte CW1 anschließt. In diesem Fenster wird schließlich ein Endpunkt erreicht, d.h. ein möglicher Zustand in der ersten Trellisspalte, der ausgewählt wurde. Dieser Punkt muß identisch sein mit demjenigen Punkt, der in dem Fenster W0 bei Durchführung des Pfadsuchalgorithmus als Anfangspunkt gewählt wurde. Dies ist in der Figur durch ein Gleichheitszeichen gekennzeichnet. Diese Identität der beiden Punkte sollte normalerweise gegeben sein.

Durch statistische Zufälligkeiten könnte dies jedoch einmal nicht der Fall sein. In einem solchen Falle wird der Pfad durch das Trellis in solcher Weise erzeugt, daß bei beiden aneinander angrenzenden Fenstern der letzte bzw. der erste ausgewählte Zustand übereinstimmen. Um von einem gegebenen Punkt eines Trellis an einen beliebigen anderen Punkt zu kommen, benötigt man eine feste, minimale Anzahl von Schritten, die durch den Aufbau des Trellis festgelegt sind. In einem Beispielsfall mit 8 auswählbaren Zuständen je Trellisspalte sind dann die letzten drei Zustände in einem Fenster Wn zu ersetzen, um einen kontinuierlichen weg in das Fenster Wn-1 zu gewährleisten. Da die Trelliskonstruktion für alle Übergänge gleich ist, kann eine Tabelle, die alle Übergangskombinationen enthält, benutzt werden, um auf einfache Weise den Weg durch das Trellis zu reparieren.

Im Ergebnis erreicht die erfindungsgemäße Anordnung, daß der vorgesehene Speicherbedarf bei der Durchführung der Trelliscodierung einschließlich Anwendung des Pfadsuchalgorithmus sehr gering ist, da nur die für die jeweiligen Trellisfenster benötigten Daten gespeichert werden müssen. Dieser Speicherbedarf kann durch eine spezielle, vorteilhafte Speicherverwaltung noch weiter vermindert werden. Es sind dann nur noch zwei Speicher S1 und S2 erforderlich, die bei der Trelliscodierung und Durchführung des Pfadsuchalgorithmus zyklisch eingesetzt werden.

In der Darstellung gemäß Fig. 3 ist für die jeweiligen Fenster in Klammern eingetragen, welcher der Speicher S1 oder S2 jeweils eingesetzt wird. So wird, abgesehen von der ersten Trelliscodierung in dem Fenster W0 ein zyklischer Einsatz dieser Speicher vorgenommen. Beispielsweise im Fenster W1 erfolgt in dem Speicher S2 die Trelliscodierung und anschließend der Pfadsuchalgorithmus. Die sich daran in dem Fenster W0 anschließende Durchführung des Pfadsuchalgorithmus wird in dem Speicher S1 vorgenommen. Da in dem Fenster W0 jedoch bereits die Codeworte ausgegeben werden und daher die Trellisinformationen nachfolgend nicht mehr benötigt werden, wird in denjenigen Trellisspalten, für die bereits Codeworte ausgegeben wurden, bereits ein Abspeichern der Informationen des Fensters W2 vorgenommen. Es werden also quasi während Ausgabe der Codeworte die alten Informationen des Trellisfensters W0 durch die Informationen des Trellisfensters W2 ersetzt. Dies hat zur Folge, daß nach Durchführung des Pfadsuchalgorithmus in dem Fenster W0 nachfolgend in dem Fenster W2 in demselben Speicher bereits die Trelliscodierung erfolgen kann. Ebenfalls in diesem Speicher wird dann in dem Fenster W2 der Pfadsuchalgorithmus eingesetzt. Die nachfolgende Durchführung des Pfadsuchalgorithmus in dem Fenster W1, bei der bereits wieder eine Ausgabe der Codeworte erfolgt, wird dann in dem zwischenzeitlich freien Speicher S2 vorgenommen. Auch hier wird der Speicher S2 bei der Ausgabe der Codeworte bereits spaltenweise wieder durch Informationen des nächsten Fensters W3 ersetzt, so daß in diesem Fenster sich der beschriebene Vorgang wiederholen kann.

Auf diese Weise werden die beiden Speicher S1 und S2 zyklisch eingesetzt und optimal genutzt. Gegenüber den Anordnungen nach dem Stande der Technik tritt eine deutliche Reduzierung des Speicheraufwandes ein.

In Fig. 4 ist schematisch ein Vorgang dargestellt, bei dem in einem der Speicher S1 oder S2 zunächst die Daten Sx eines Trellisfensters n-1 gespeichert waren. Für diese Daten erfolgt eine Ausgabe der Codeworte CW(n-1) bei Durchführung des Pfadsuchalgorithmus.

In der Figur ist ein schraffierter Block gekennzeichnet, für den mittels des Pfadsuchalgorithmus aus den Daten Sx(n-1) des Trellisfensters n-1 bereits eine Ausgabe der Codeworte CW(n-1) erfolgt ist. Dieser Speicherplatz kann bereits durch neue Daten Sx(n+1) eines Trellisfensters n+1 beschrieben werden. Dieser Block ist in der Figur schraffiert gekennzeichnet.

Mit fortschreitender Durchführung des Pfadsuchalgorithmus auf die Daten Sx des Fensters n-1 wird sich der Bereich dieser Daten in dem Speicher immer weiter verkleinern und der schraffiert dargestellte Bereich, in den bereits Daten des Trellisfensters Sx(n+1) gespeichert werden, weiter vergrößern. Dies geschieht so lange, bis alle Codeworte des Fensters n-1 ausgegeben wurden und der gesamte Speicher mit den Daten Sx des Fensters n+1 gefüllt ist. Somit kann in diesem Speicher anschließend eine Trelliscodierung für diese Daten erfolgen.

## Patentansprüche

1. Anordnung zur Trelliscodierung von Eingangswerten, vorzugsweise transformierten Bildpunktdaten eines Bildes, wobei ein Trellis gebildet wird, in welchem jeder Trellisspalte ein Eingangswert zugeordnet ist, in welchem in jeder Trellisspalte eine vorgegebene Anzahl von möglichen Zuständen vorgesehen ist, in welchem die Auswahl eines Weges aus wenigstens zwei zugelassenen Wegen von einem Zustand einer Trellisspalte n zu demjenigen Zustand in der folgenden Trellisspalte n+1, zu dem der ausgewählte Weg führt, abhängig ist von der Verzerrung zwischen dem der Trellisspalte n zugeordneten Eingangswert und Quantisierungswerten, die dem Zustand in der Trellisspalte n zugeordnet sind, wobei die Verzerrung ein Maß für die Abweichung zwischen einem Eingangswert und einem Quantisierungswert darstellt, und in welchem mittels eines Pfadsuchalgorithmus in Rückwärtsrichtung derjenige Pfad durch das gesamte Trellis gesucht wird, für den sich über den gesamten Verlauf im Trellis die geringste aufsummierte Verzerrung ergibt,
dadurch gekennzeichnet,

daß Mittel zum Bilden von Fenstern vorgesehen sind, welche jeweils eine solche Menge von Trellisspalten, die aufeinanderfolgenden Eingangswerten zugeordnet sind, umfassen, daß Trellisspalten jeweils gleicher Position in benachbarten Fenstern weiter als eine Einflußlänge voneinander entfernt liegen, wobei die Einflußlänge denjenigen maximalen Abstand zwischen zwei Trellisspalten darstellt, für den in Folge der vorgegebenen zugelassenen Pfade durch das Trellis bezüglich der für die in den beiden Trellisspalten jeweils auswählbaren Quantisierungswerte gerade noch eine statistische Abhängigkeit existiert, daß Mittel zum Speichern vorgesehen sind, welche die in den Fenstern bei der Durchführung der Trelliscodierung und/oder des Pfadsuchalgorithmus benötigten und ermittelten Daten aufnehmen, daß in einem ersten Fenster W0 einer Sequenz von Eingangswerten eine Trelliscodierung durchgeführt wird und daß in allen weiteren Fenstern der Sequenz in jedem Fenster Wn eine Trelliscodierung und im Fenster Wn und nachfolgend im Fenster Wn-1 der Pfadsuchalgorithmus angewendet werden, wobei bei der Durchführung des Pfadsuchalgorithmus im Fenster Wn-1 die Codeworte zu den den Trellisspalten des Fensters zugeordneten Eingangswerten ausgegeben werden.

2. Anordnung nach Anspruch 1, dadurch gekennzeichnet,

daß für jede Trelliscodierung, in inem Fenster Wn sichergestellt wird, daß bei Anwendung des Pfadsuchalgorithmus und Ausgabe der Codeworte in der ersten Spalte der gleiche mögliche Zustand ausgewählt wird, von dem zuvor in dem Fenster Wn-1 bei Anwendung des Pfadsuchalgorithmus und Ausgabe der Codeworte als Ausgangswert ausgegangen wurde.

3. Anordnung nach Anspruch 1, dadurch gekennzeichnet,

daß in der Anordnung als Mittel zum Speichern ein erster Speicher (S1) und ein zweiter Speicher (S2) vorgesehen sind, welche für die Speicherung der den möglichen Zustanden zugeordneten Quantisierungswerte sowie den zu speichernden Wetten der aufsummierten Verzerrung und des gewählten Pfades dienen und welche bei der Trelliscodierung und der Anwendung des Pfadsuchalgorithmus in der Weise in einem Zyklus eingesetzt werden, daß die Trelliscodierung in einem Fenster Wn in dem ersten Speicher (S1), die nachfolgende Anwendung des Pfadsuchalgorithmus im Fenster Wn in dem ersten Speicher (S1) und die nachfolgende Anwendung des Pfadsuchalgorithmus im Fenster Wn-1 in dem zweiten Speicher (S2) vorgenommen werden, daß bei der Anwendung des Pfadsuchalgorithmus im Fenster Wn-1 trellisspaltenweise die ermittelten die Codeworte ausgegeben werden, wobei die Daten der Trellisspalten, für die Codeworte ausgegeben wurden, in dem zweiten Speicher (S2) durch die den möglichen Zustanden zugeordneten Quantisierungswerte des Fensters Wn+1 ersetzt werden, daß die Trelliscodierung in dem Fenster Wn+1 in dem zweiten Speicher (S2), die nachfolgende Anwendung des Pfadsuchalgorithmus im Fenster Wn+1 in dem zweiten Speicher (S2) und die nachfolgende Anwendung des Pfadsuchalgorithmus im Fenster Wn in dem ersten Speicher (S1) vorgenommen werden, wobei die Daten der Trellisspalten, für die Codeworte ausgegeben wurden, in dem ersten Speicher (S1) durch die den möglichen Zustanden zugeordneten Quantisierungswerte des Fensters Wn+2 ersetzt werden, wonach sich der Zyklus des Speichereinsatzes für das Fenster Wn+2 und die nachfolgenden Fenster wiederholt.

4. Anordnung nach Anspruch 1, <u>dadurch gekennzeichnet</u>,

   daß als Pfadsuchalgorithmus der Viterbi-Algorithmus eingesetzt wird.

5. Anordnung nach Anspruch 1, <u>dadurch gekennzeichnet</u>,

   daß die Verzerrung zwischen einem Eingangswert und einem Quantisierungswert aus dem Quadrat des Abstands zwischen den Werten ermittelt wird.

6. Anordnung nach Anspruch 1, <u>dadurch gekennzeichnet</u>,

   daß das letzte Fenster einer zu codierenden Sequenz eine Anzahl von Spalten aufweist, die größer als die Einflußlänge ist.

7. Anordnung nach Anspruch 1, <u>dadurch gekennzeichnet</u>,

   daß es sich bei den Eingangswerten um Bildpunkte eines Standbildes handelt, die einer zweidimensionalen Diskreten Wavelet Transformation unterzogen wurden.

8. Anordnung nach Anspruch 1, <u>dadurch gekennzeichnet</u>,

   daß die Einflußlänge $\Xi \geq 5 \cdot N$ beträgt, wobei N die Zahl der möglichen Zustände pro Trellisspalte ist.

S0  n
0/D0

1/D2

S1  0/D2

1/D0

S2  0/D1

1/D3

S3  0/D3

1/D3

n+1

## FIG. 1

CW(n-1) ◄

Sx(n-1)

Sx(TSn+1)

## FIG. 4

FIG. 2

FIG. 3